# EUROPÄISCHE PATENTANMELDUNG

(11) **EP 1 647 729 A2**
(43) Veröffentlichungstag der Anmeldung: **19.04.2006**
(21) Anmeldenummer: 05021789.2
(22) Anmeldetag: 06.10.2005
(51) Int. Cl.: F16D 13/64

(54) **Kupplungsscheibenanordnung für eine Mehrscheibenkupplung**

(30) Priorität: 15.10.2004 DE 102004050238
(71) Anmelder: LuK Lamellen und Kupplungsbau Beteiligungs KG, 77815 Bühl (DE)
(72) Erfinder: Krüger, Lutz, 77833 Ottersweier (DE); Fohr, Alexis, 67500 Haguenau (FR)

(57) **Zusammenfassung**

Die Anmeldung umfasst eine Kupplungsscheibenanordnung (1) für eine Mehrscheibenkupplung mit wenigstens zwei Reibbelaganordnungen (18,19), die jeweils mindestens zwei Rücken an Rücken angeordnete Reibbeläge mit dazwischen vorgesehener Belagfederung (20) aufweisen.

## Beschreibung

Die Erfindung betrifft eine Kupplungsscheibenanordnung für eine Mehrscheibenkupplung mit wenigstens zwei Reibbelaganordnungen, die jeweils mindestens zwei Rücken an Rücken angeordnete Reibbeläge mit dazwischen vorgesehener Belagfederung aufweisen, wobei die Reibbelaganordnungen jeweils am Außenumfang eines Trägers vorgesehen und mit diesem drehverbunden sind, und die Träger auf einem Nabenelement derart aufgenommen sind, dass sie einerseits eine Drehmomentübertragung auf das Nabenelement gewährleisten und andererseits zumindest eine begrenzte axiale Verlagerung zueinander besitzen.

Derartige Kupplungsscheibenanordnungen wurden beispielsweise durch die DE 100 24 088 A1 vorgeschlagen.

Der vorliegenden Erfindung lag die Aufgabe zugrunde, Kupplungsscheibenanordnungen gemäß der eingangs beschriebenen Art derart zu gestalten, dass diese einen einfachen Aufbau und eine vielseitige Einsetzbarkeit aufweisen. Weiterhin soll gewährleistet werden, dass Kupplungsaggregate, welche mit erfindungsgemäß ausgestalteten Kupplungsanordnungen versehen sind, ein einwandfreies Drehmoment-Trennverhalten besitzen.

Erfindungsgemäß wird dies unter anderem dadurch gelöst, dass die zwischen den jeweils paarweise Rücken an Rücken angeordneten Reibbelägen vorgesehene Belagfederung eine Ausbildung besitzt, die gewährleistet, dass, bei einer axialen Verlagerung der beiden Reibbeläge aufeinander zu, der eine Reibbelag - bezogen auf die durch die Belagfederung gewährleistete axiale Relativbewegung zwischen den Reibbelägen - einen größeren Weg zurücklegt als der andere und die den größeren axialen Bewegungsweg zurücklegenden Reibbeläge der beiden Reibbelaganordnungen einander zugekehrt sind. Durch eine derartige Ausgestaltung der Kupplungsscheibenanordnung kann die während einer Betätigung des entsprechenden Kupplungsaggregates erfolgende axiale Verlagerung des Nabenelementes auf der Getriebeeingangswelle reduziert werden. Es erfolgt also die zur Unterbrechung des Drehmomentflusses notwendige axiale Verlagerung zwischen den Reibbelaganordnungen, hauptsächlich unmittelbar zwischen diesen. Während der Entspannungsphase der Belagfederungen werden praktisch ausschließlich die diese tragenden Träger, welche mit dem Nabenelement drehgekoppelt sind, axial zueinander verlagert, so dass zumindest während dieser Betätigungsphase ein zwischen dem Nabenelement und der Getriebeeingangswelle vorhandener Verschiebewiderstand die Drehmomentunterbrechung während des Öffnens nicht stört. Nachdem die Belagfederungen entspannt sind, liegt an den Reibbelaganordnungen praktisch kein bzw. nur ein geringes Drehmoment an, so dass bei Fortsetzung des Ausrückvorganges die Nabe 5 auf der Getriebeeingangswelle praktisch frei verlagerbar ist, da die Mitnahmeverzahnungen entlastet sind.

In vorteilhafter Weise können die Reibbeläge einer Reibbelaganordnung jeweils mit einer Vielzahl von in ringartiger Anordnung vorgesehenen Trägersegmenten verbunden sein, die am Außenumfang eines Trägers angeordnet sind, wobei die dem einen Reibbelag mit größerem axialem Bewegungsweg zugeordneten Segmente bezüglich ihrer elastischen Verformbarkeit weicher ausgelegt sind als die dem anderen Reibbelag zugeordneten Federsegmente. Anstelle von ringförmigen Reibbelägen könnten jedoch auch segmentförmige Reibbeläge Verwendung finden (so genannte Pads), die ebenfalls jeweils paarweise einander zugeordnet sind, wobei jedem Reibbelag eines derartigen Paares wenigstens ein Trägersegment zugeordnet ist.

Besonders vorteilhaft kann es sein, wenn die dem anderen ringförmigen Reibbelag zugeordneten Federsegmente keine oder praktisch keine elastische Verformung während einer axialen Verlagerung der beiden Reibbeläge zueinander erfahren. Eine entsprechende Ausgestaltung der Federsegmente kann auch bei segmentartig ausgebildeten Reibbelägen (Pads) Verwendung finden.

Zweckmäßig kann es sein, wenn der Reibbelag mit dem größeren axialen Bewegungsweg über eine Mehrzahl von in Umfangsrichtung ringartig angeordneten Federsegmenten getragen ist, welche diesen Reibbelag gegenüber einer ringförmigen Trägerscheibe, die auch den anderen Reibbelag trägt, federnd abstützen.

Weitere zweckmäßige Ausgestaltungsmerkmale gehen aus den Ansprüchen 5 bis 11 hervor.

Weitere konstruktive Ausgestaltungsmerkmale sowie vorteilhafte Wirkungsweisen einer entsprechend der Erfindung ausgestalteten Kupplungsscheibenanordnung sowie eines damit zusammenwirkenden Kupplungsaggregates werden in Verbindung mit der nun folgenden Figurenbeschreibung näher erläutert.

Dabei zeigen:
- Figur 1: im Schnitt eine erfindungsgemäße Kupplungsscheibenanordnung, welche in ein Kupplungsaggregat verbaut ist,
- Figur 2: in Ansichtsrichtung gemäß dem Pfeil I der Figur 1 das Nabenelement der Kupplungsscheibenanordnung mit einer mit dieser über ein flanschartiges Bauteil verbundenen Reibbelaganordnung,
- Figur 3: in Ansichtsrichtung gemäß dem Pfeil I der Figur 1 die zweite Reibbelaganordnung, welche auf dem Nabenelement aufgenommen wird und
- Figur 4: ein Ausführungsbeispiel einer möglichen Belagfederung, welche zwischen den beiden Reibbelägen einer Reibbelaganordnung vorgesehen ist.

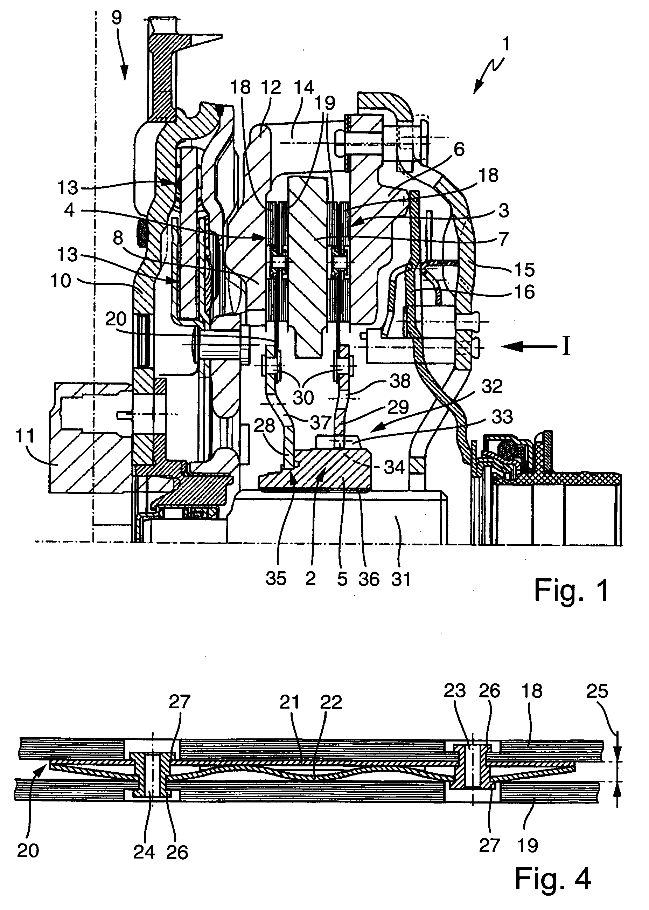

Das in Figur 1 dargestellte Kupplungsaggregat 1 besteht aus einer Kupplungsscheibenanordnung 2, welche zwei Reibbelaganordnungen 3, 4 besitzt, die mit einem Nabenkörper 5 antriebsmäßig verbunden sind. Die Reibbelaganordnungen 3, 4 sind axial einspannbar zwischen plattenförmigen Bereichen 6, 7, 8 des Kupplungsaggregates 1. Der plattenförmige Bereich 8 ist durch eine Komponente eines Schwungrades gebildet, welches bei dem dargestellten Ausführungsbeispiel als so genanntes Zweimassenschwungrad 9 ausgestaltet ist. Das Zweimassenschwungrad 9 besitzt eine Primärmasse 10, welche mit der Abtriebswelle 11 eines Motors drehfest verbindbar ist. Die den plattenförmigen Bereich 8 umfassende Sekundärmasse ist gegenüber der Primärmasse 10 verdrehbar gelagert und entgegen einer Torsionsdämpfungseinrichtung 13 verdrehbar. Die Torsionsdämpfungseinrichtung besitzt Energiespeicher sowie parallel zu diesen wirksamen Dämpfungsmittel, zum Beispiel Reibungsmittel. Die Sekundärmasse 12 ist mit dem Ausgangsteil der Torsionsdämpfungseinrichtung antriebsmäßig gekoppelt.

Zweimassenschwungräder sind beispielsweise durch die DE 37 21 712 A1, die DE 38 07 937 A1 und die DE 197 25 291 A1 bekannt geworden, so dass bezüglich des prinzipiellen Aufbaus und deren Wirkungsweise in der vorliegenden Anmeldung nicht näher eingegangen wird.

Der plattenförmige Bereich 8 ist Bestandteil eines topfförmigen Bauteils 14, auf dem das in Form eines Blechdeckels ausgebildete Gehäuse 15 des Kupplungsaggregates 1 befestigt ist.

Im axialen Bauraum zwischen dem scheibenförmigen Bereich 8 und dem Gehäuse 15 sind der axialen Reihenfolge nach, von links nach rechts betrachtet:
- die Reibbelaganordnung 4,
- eine den plattenförmigen Bereich 7 bildende Zwischendruckplatte 7,
- die zweite Reibbelaganordnung 3,
- eine den plattenförmigen Bereich 6 bildende Anpressplatte 6,
- eine Tellerfeder und/oder Hebelanordnung 16 zum Öffnen und Schließen des Kupplungsaggregates
angeordnet.

Die Anpressplatte 6 ist beispielsweise über Blattfederelemente mit dem Kupplungsgehäuse 15 drehfest, jedoch axial verlagerbar gekoppelt. Bei dem dargestellten Ausführungsbeispiel ist das Kupplungsaggregat als so genanntes selbst nachstellendes Kupplungsaggregat ausgebildet, welches zumindest die an den Reibbelaganordnungen 3 und 4 auftretenden Belagverschleiß durch eine entsprechende axiale Nachstellung der Anpressplatte 6 in Richtung des plattenförmigen Bereiches 8 kompensiert. Hierfür verwendbare Nachstelleinrichtungen sind beispielsweise durch die DE 43 22 677 A1, die DE 195 10 905 A1, die DE 195 24 827 A1 und die DE 199 41 210 A1 bekannt geworden, so dass bezüglich des prinzipiellen Aufbaus und der Funktionsweise derartiger Kupplungen in der vorliegenden Erfindung ebenfalls nicht eingegangen wird, sondern ebenfalls auf diesen Stand der Technik verwiesen wird.

Aus den Figuren 1 und 4 ist zu entnehmen, dass jede Reibbelaganordnung 3, 4 aus zwei ringförmigen Reibbelägen 18, 19 besteht, die Rücken an Rücken angeordnet sind. Axial zwischen den einander zugeordneten Reibbelägen 18, 19 ist eine so genannte Belagfederung 20 angeordnet, die in Figur 4 im entspannten Zustand dargestellt ist.

Die Belagfederungen 20 besitzen eine axiale Elastizität, so dass beim Schließen des Kupplungsaggregates 1 die entsprechenden Reibbeläge 18, 19 entgegen der durch die Belagfederung 20 aufgebrachten Axialkraft aufeinander zu bewegt werden. Die Verwendung einer Belagfederung 20 zwischen den einander zugeordneten Reibbelägen 18, 19 ermöglicht über den Einrückweg bzw. Ausrückweg des Kupplungsaggregates 1 einen progressiven bzw. allmählichen Drehmomentaufbau bzw. Drehmomentabbau. Dadurch wird ein weiches Einkuppeln ermöglicht.

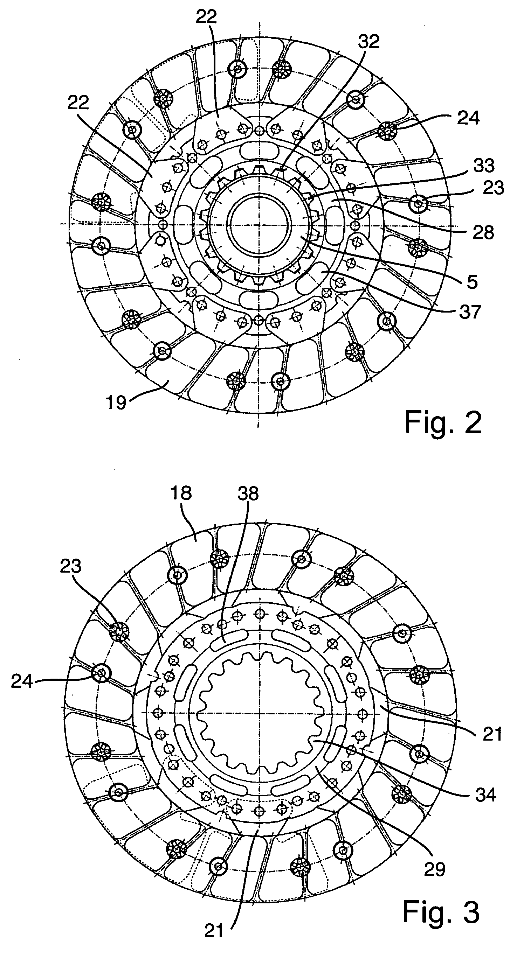

Wie in Zusammenhang mit den Figuren 3 und 4 ersichtlich ist, sind die ringförmigen Reibbeläge 18, 19 von in ringartiger Anordnung vorgesehenen, segmentförmigen Bauteilen 21 bzw. 22 getragen. Die Halterung der Reibbeläge 18, 19 mit den ihnen zugeordneten; als Träger dienenden, segmentförmigen Bauteile 21 bzw. 22 erfolgt mittels Nietverbindungen 23 und 24.

Wie aus Figur 4 hervorgeht, sind die Niete 23, 24 bei dem dargestellten Ausführungsbeispiel derart ausgestaltet, dass sie im entspannten Zustand der Belagfederung 20 einen definierten Abstand 25 zwischen den Reibbelägen 18, 19 gewährleisten. Hierfür besitzen die Niete 23, 24 einerseits einen Belagbefestigungsbereich 26 zur Herstellung der Verbindung zwischen dem entsprechenden Belag und den zugeordneten, segmentförmigen Bauteilen sowie einen Abstützbereich 27, der die segmentförmigen Bauteile des anderen Reibbelages hintergreift. Durch eine derartige Ausgestaltung kann auch der Entspannungsweg der Belagfederung 20 begrenzt werden, so dass, falls erforderlich, auch im nicht belasteten Zustand der Reibbeläge 18, 19 die Belagfederung 20 zumindest eine geringe Vorspannung aufweisen kann. Letzteres ist jedoch nicht unbedingt erforderlich und es sind auch Ausführungsformen denkbar, bei denen durch entsprechende Ausbildung der die Reibbeläge 18, 19 tragenden Segmente 21, 22 die beschriebene Wegbegrenzung mittels der Nietverbindungen 23, 24 nicht erforderlich ist.

Nietverbindungen zwischen Belagfedersegmenten und Reibbelägen sind beispielsweise durch die DE 2111892 A1, DE 2951573 A1 und DE 3712647 A1 bekannt geworden.

Aus Figur 4 ist zu entnehmen, dass bei dem dargestellten Ausführungsbeispiel lediglich die Belagträgersegmente 22 aufgrund ihrer Formgebung zur Bildung des durch die Belagfederung 20 gewährleisteten, axialen Federweges der beiden Reibbeläge 18, 19 aufeinander zu beitragen. Die Belagträgersegmente 21 sind bei dem Ausführungsbeispiel lediglich durch im Wesentlichen ebene Trägersegmente gebildet, die hier praktisch keine axiale Federung gewährleisten. Es sind jedoch auch Ausgestaltungen möglich, bei denen auch die segmentförmigen Bauteile 21 eine gewisse axiale Elastizität und somit Bewegbarkeit der Reibbeläge 18, 19 axial aufeinander zu ermöglichen. Dabei sollte jedoch die Ausgestaltung der Belagträgersegmente 21, 22 derart erfolgen, dass die Segmente 22 eine größere axiale Bewegung der Reibbeläge 18, 19 als die Segmente 21 ermöglichen. Beispielsweise kann der durch die Segmente 21 gewährleistete Federweg lediglich 5 bis 40 % des durch die Segmente 22 ermöglichten Federweges betragen.

Wie aus Figur 1 ersichtlich ist, sind die Segmente 21, 22 mit scheibenförmigen bzw. flanschartigen Bauteilen 28, 29 verbunden, und zwar bei dem dargestellten Ausführungsbeispiel über Nietverbindungen 30. Die flanschartigen Bauteile sind ihrerseits wiederum radial innen mit dem Nabenkörper 5 drehgekoppelt. Der Nabenkörper 5 ist zur Aufnahme auf einer Getriebeeingangswelle 31 ausgebildet.

Die vor beschriebene Ausgestaltung der jeweils zwischen den Reibbelägen 18, 19 der Reibbelaganordnungen 3, 4 vorhandene Belagfederung 20 bzw. Trägersegmente 21, 22 gewährleistet, dass der Reibbelag 18 gegenüber dem jeweiligen flanschartigen Bauteil 28 bzw. 29 praktisch keine oder aber eine wesentlich geringere axiale Verlagerbarkeit aufweist als der Reibbelag 19. Eine derartige Ausgestaltung gewährleistet, dass beim Öffnen des Kupplungsaggregates 1 der Nabenkörper 5 auf der Getriebeeingangswelle 31 praktisch keine bzw. nur eine sehr geringe, axiale Verlagerung erfährt. Der zum Trennen der Reibungskupplung notwendige größere Weganteil zwischen den Reibbelaganordnungen 3 und 4 erfolgt durch axiale Verlagerung der Reibbelaganordnung 3 bzw. des diese tragenden, flanschartigen Bauteiles 29 gegenüber dem Nabenkörper 5. Hierfür sind die beiden flanschartigen Bauteile 28, 29 zueinander axial verlagerbar, jedoch in Umfangsrichtung drehfest gekoppelt. Bei dem dargestellten Ausführungsbeispiel erfolgt dies, indem das flanschartige Bauteil 28 radial innen mit dem Nabenkörper 5 drehfest verbunden ist und das flanschartige Bauteil 29 über eine Verzahnungsverbindung 32 auf dem Nabenkörper 5 drehfest, jedoch axial verlagerbar, aufgenommen ist. Die Verzahnungsverbindung 32 umfasst eine am Nabenkörper 5 angeformte Außenverzahnung 33, in welche die Innenverzahnung 34 des flanschartigen Bauteiles 29 eingreift. Die axiale Erstreckung der Außenverzahnung 33 ist dabei größer als die der Innenverzahnung 34.

Die drehfeste Verbindung des flanschartigen Bauteiles 28 mit dem Nabenkörper 5 erfolgt über eine formschlüssige Verbindung 35, die bei dem Ausführungsbeispiel als so genannte Verstemmverbindung ausgebildet ist. Derartige Verbindungen sind beispielsweise durch die DE 2461566 A1, die DE 2220657 A1 oder die DE 1112673 C bekannt geworden, so dass diesbezüglich auf diese Schriften Bezug genommen wird.

Bei dem Ausführungsbeispiel sind die Segmente 21 durch einzelne, separate Bauteile gebildet. Die Segmente 21 können jedoch auch in vorteilhafter Weise einstückig mit einem inneren ringförmigen Bereich ausgebildet sein, der die Funktion des flanschartigen Bauteiles 28 zumindest teilweise übernimmt. Derartige Ausgestaltungen sind in Zusammenhang mit axial federnden Segmenten, beispielsweise durch die DE 1425356 A1 oder die DE 483187 C, bekannt geworden.

Da die Trägersegmente 21 für einen Reibbelag 18 keine axialen Federeigenschaften besitzen müssen, könnten diese auch durch ein ringförmiges Trägerbauteil ersetzt werden.

Bei dem Ausführungsbeispiel sind zwei Gruppen von Belagträgersegmenten 21 und 22 vorgesehen um zu gewährleisten, dass beim Komprimieren der entsprechenden Belagfederung 20 im Wesentlichen lediglich der Reibbelag 19 eine axiale Bewegung erfährt. Es sind jedoch auch Ausgestaltungen von Federsegmenten möglich, die durch Aufteilung in verschiedene Segmentzonen mit unterschiedlichen Federeigenschaften gewährleisten, dass beim axialen Zusammendrücken solcher Federsegmente einer der Beläge 18, 19 einen wesentlich größeren Weg zurücklegt als der andere Belag. Bei einer derartigen Ausgestaltung könnten also die Segmente 21 entfallen und beide Reibbeläge 18, 19 von den gleichen Federsegmenten getragen sein.

Die dargestellte, erfindungsgemäße Ausgestaltung einer Kupplungsscheibenanordnung hat den Vorteil, dass die Nabenaußenverzahnung 33 im Durchmesser verhältnismäßig klein ausgeführt werden kann. Dadurch wird gewährleistet, dass bei verhältnismäßig kleinem Umfangsspiel innerhalb der Verzahnungsverbindung 32 das flanschartige Bauteil 29 in Bezug auf die Rotationsachse eine gewisse Kippmöglichkeit besitzt. Dadurch wird gewährleistet, dass das System unempfindlich ist gegen Formfehler der Bauteile und einen schiefen Abhub der Anpressplatte 6 bzw. der Zwischenplatte 7. Vorteilhaft kann es sein, wenn der Kopfkreisdurchmesser der Nabenaußenverzahnung 33 höchstens das 2,5-fache des Kopfkreisdurchmessers der Nabeninnenverzahnung 36 zur Drehverbindung mit der Getriebeeingangswelle 31 beträgt.

Die Verbindung 35 zwischen dem flanschartigen Bauteil 28 und dem Nabenkörper 5 ist auf einem kleineren Durchmesser angeordnet als die Außenverzahnung 33.

Der Nabenkörper 5 ist verhältnismäßig kompakt bzw. klein ausgebildet, wodurch auch das Trägheitsmoment der Kupplungsscheibenanordnung 2 klein gehalten werden kann. Die kompakte Ausgestaltung des Nabenkörpers 5 gewährleistet auch eine kostengünstige Herstellung beispielsweise als Sinterteil oder als Schmiedeteil. Dadurch wird gewährleistet, dass praktisch keine oder nur eine sehr geringe spanabhebende Bearbeitung des Nabenkörperrohlings erforderlich ist. Auch können die Verzahnungen des Nabenkörpers 5 in einfacher Weise zumindest über eine bestimmte Materialtiefe gehärtet werden. In ähnlicher Weise kann auch die Innenverzahnug 34 des flanschartigen Bauteiles 29 vergütet sein. Die Innenverzahnung 34 kann in einfacher Weise gestanzt werden.

Die Verwendung eines gewellten Federsegmentes 22 und eines ungewellten Segmentes 21 gewährleistet weiterhin eine gute Abstützung der Wellungen des Segmentes 22, wodurch auch die Einbettverluste der Belagfederung in die Reibbelaganordnungen 3, 4 verringert werden können. Das ungewellte Segment 21 gewährleistet, dass die Kontaktfläche zwischen den Segmenten und den Reibbelägen vergrößert wird, wodurch wiederum die Flächenpressung verringert werden kann.

Aus den Figuren 2 und 3 ist zu entnehmen, dass die flanschartigen Bauteile 28, 29 jeweils eine Reihe von in Umfangsrichtung hier gleichmäßig verteilten Ausschnitten 37, 38 aufweisen, welche zur Belüftung des Kupplungsaggregates 1 beitragen. Die Ausschnitte 37, 38 sind in Umfangsrichtung länglich ausgebildet. Zumindest im Bereich der gezeigten Ausschnitte 37, 38 könnten die flanschartigen Bauteile 28, 29 auch derart ausgebildet werden, dass Belüftungsschaufeln durch entsprechend verformtes Materials entstehen. Derartige Belüftungsschaufein könnten jedoch auch durch wenigstens ein entsprechend ausgebildetes Blechformteil gebildet werden, welches auf wenigstens eines der flanschartigen Bauteile 28, 29 fixiert wird.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und den Figurenbeschreibungen sowie den Ansprüchen beschriebenen und in den Zeichnungen enthaltenen Merkmalen bzw. Elementen oder Verfahrensschritten gebildet werden können.

### Bezugszeichenliste

- 1: Kupplungsaggregat
- 2: Kupplungsscheibenanordnung
- 3, 4: Reibbelaganordnungen
- 5: Nabenkörper
- 6, 7, 8: plattenförmige Bereiche
- 9: Zweimassenschwungrad
- 10: Primärmasse
- 11: Antriebswelle
- 12: Sekundärmasse
- 13: Torsionsdämpfungseinrichtung
- 14: topfförmiges Bauteil
- 15: Gehäuse
- 16: Hebelanordnung
- 17:
- 18, 19: ringförmige Reibbeläge
- 20: Belagfederung
- 21, 22: segmentförmige Bauteile
- 23, 24: Nietverbindungen
- 25: Abstand
- 26: Belagbefestigungsbereich
- 27: Abstützbereich
- 28, 29: flanschartige Bauteile
- 30: Nietverbindungen
- 31: Getriebeeingangswelle
- 32: Verzahnungsverbindung
- 33: Außenverzahnung
- 34: Innenverzahnung
- 35: formschlüssige Verbindung
- 36: Nabeninnenverzahnung
- 37, 38: Ausschnitte

## Patentansprüche

1. Kupplungsscheibenanordnung für eine Mehrscheibenkupplung mit wenigstens zwei Reibbelaganordnungen, die jeweils mindestens zwei Rücken an Rücken angeordnete Reibbeläge mit dazwischen vorgesehener Belagfederung aufweisen, wobei die Reibbelaganordnungen jeweils am Außenumfang eines Trägers vorgesehen und mit diesem drehverbunden sind und die Träger auf einem Nabenelement derart aufgenommen sind, dass sie einerseits eine Drehmomentübertragung auf das Nabenelement gewährleisten und andererseits zumindest eine begrenzte axiale Verlagerung zueinander besitzen, **dadurch gekennzeichnet, dass** die zwischen den jeweils paarweise Rücken an Rücken angeordneten Reibbeläge vorgesehene Belagfederung derart ausgebildet ist, dass bei einer axialen Verlagerung der beiden Reibbeläge aufeinander zu, der eine Reibbelag - bezogen auf die durch die Belagfederung gewährleistete axiale Relativbewegung zwischen den Reibbelägen - einen größeren Weg zurücklegt als der andere und die den größeren axialen Bewegungsweg zurücklegenden Reibbeläge der beiden Reibbelaganordnungen einander zugekehrt sind.

2. Kupplungsscheibenanordnung nach Anspruch 1, **dadurch gekennzeichnet, dass** die Reibbeläge einer Reibbelaganordnung jeweils mit einer Vielzahl von in ringartiger Anordnung vorgesehenen Trägersegmenten verbunden sind, die am Außenumfang eines Trägers angeordnet sind, wobei die dem einen Reibbelag mit größerem axialem Bewegungsweg zugeordneten Segmente bezüglich ihrer elastischen Verformbarkeit weicher ausgelegt sind als die dem anderen Reibbelag zugeordneten Federsegmente.

3. Kupplungsscheibenanordnung nach Anspruch 2, **dadurch gekennzeichnet, dass** die dem anderen Reibbelag zugeordneten Federsegmente keine oder praktisch keine elastische Verformung während einer axialen Verlagerung der beiden Reibbeläge zueinander erfahren.

4. Kupplungsscheibenanordnung nach Anspruch 1, **dadurch gekennzeichnet, dass** der eine Reibbelag mit dem größeren axialen Bewegungsweg über eine Mehrzahl von in Umfangsrichtung ringartig angeordneten Federsegmenten getragen ist, welche diesen einen Reibbelag gegenüber einer ringförmigen Trägerscheibe federnd abstützen, welche auch den anderen Reibbelag trägt.

5. Kupplungsscheibenanordnung nach Anspruch 1 bis Anspruch 4, **dadurch gekennzeichnet, dass** der eine Träger durch eine flanschartige Scheibe gebildet ist, die radial innen auf einer Schulter des Nabenelementes drehfest aufgenommen ist.

6. Kupplungsscheibenanordnung nach Anspruch 5, **dadurch gekennzeichnet, dass** die flanschartige Scheibe über eine Verstemmung mit dem Nabenelement axial fest verbunden ist.

7. Kupplungsscheibenanordnung nach wenigstens einem der vorhergehenden Ansprüche 1 bis 6, **dadurch gekennzeichnet, dass** der zweite Träger ebenfalls durch eine flanschartige Scheibe gebildet ist, die an ihrem Innenumfang eine Innenverzahnung aufweist, welche in eine Außenverzahnung des Nabenelementes eingreift.

8. Kupplungsscheibenanordnung nach Anspruch 7, **dadurch gekennzeichnet, dass** die Außenverzahnung des Nabenelementes zumindest eine begrenzte axiale Verlagerbarkeit des zweiten flanschartigen Teils gewährleistet.

9. Kupplungsscheibenanordnung nach wenigstens einem der vorhergehenden Ansprüche 1 bis 8, **dadurch gekennzeichnet, dass** das Nabenelement massiv ausgestaltet ist und die Außenverzahnung die einzigen radial nach außen vorstehenden Bereiche des Nabenelementes bilden.

10. Kupplungsscheibenanordnung nach einem der Ansprüche 5 bis 9, **dadurch gekennzeichnet, dass** die Verstemmung der einen flanschartigen Scheibe mit dem Nabenelement auf einem kleineren Durchmesser vorgesehen ist als die Außenverzahnung dieses Nabenelements.

11. Kupplungsscheibenanordnung nach wenigstens einem der Ansprüche 7 bis 10, **dadurch gekennzeichnet, dass** das Nabenelement eine Innenverzahnung zur Aufnahme auf einer anzutreibenden Welle aufweist und der Kopfkreisdurchmesser der Außenverzahnung höchstens 2,5-mal den Kopfkreisdurchmesser der Innenverzahnung aufweist.
